# FASCICULE DE BREVET EUROPEEN

(11) **EP 3 662 568 B1**
(45) Date de publication et mention de la délivrance du brevet: **22.07.2026**
(21) Numéro de dépôt: 18743549.0
(22) Date de dépôt: 30.07.2018
(51) Int. Cl.: H02K 15/00, H02K 17/20

(54) **ROTOR À CAGE D'ÉCUREUIL INJECTÉE**
SPRITZGEGOSSENER KURZSCHLUSSLÄUFER
INJECTION-MOULDED SQUIRREL CAGE ROTOR

(30) Priorité: 31.07.2017 FR 1757305
(43) Date de publication de la demande: 10.06.2020
(73) Titulaire: Moteurs Leroy-Somer, 16915 Angouleme Cedex 9 (FR)
(72) Inventeur: PORCHER, Sébastien, 33820 Saint Palais De Blaye (FR); VISSE, Thierry, 16110 Bunzac (FR); BOULIN, Stéphane, 16340 L'Isle D'Espagnac (FR); TURCAT, François, 16330 Montignac Sur Charente (FR)
(74) Mandataire: Ipsilon
(86) Numéro de dépôt international: PCT/EP2018/070563
(87) Numéro de publication internationale: WO 2019/025350

(56) Documents cités:
- DE-A1- 102010 041 796
- JP-A- S56 103 953
- US-A1- 2015 288 265

## Description

La présente invention concerne les machines électriques tournantes et plus particulièrement les rotors de telles machines.

### Arrière-plan

Les moteurs électriques asynchrones comportent, de façon conventionnelle, un paquet de tôles magnétiques traversé par des encoches. De l'aluminium est injecté sous pression pour former des barreaux qui sont reliés à l'extérieur du paquet de tôles par des anneaux de court-circuit.

Pour améliorer les performances électriques, il peut s'avérer intéressant de diminuer encore la résistivité électrique des barreaux en remplaçant l'aluminium par du cuivre. Toutefois, la température de fusion du cuivre étant bien supérieure à celle de l'aluminium, il devient difficile d'injecter du cuivre dans les encoches.

Une solution connue consiste ainsi à introduire des barres conductrices en cuivre dans les encoches et à injecter de l'aluminium sous pression pour remplir l'espace laissé libre à l'intérieur des encoches par les barres.

Les demandes WO2011015494, WO2010100007, WO2009038678, US2011291516, WO2014067792, WO2011020788, WO2015071156, WO2012041943, JPH10234166, CN1925280, JPH11206080, JP2005278373, JPH1028360 décrivent des rotors dont le paquet de tôles comporte des encoches recevant des barres de cuivre et dans lesquelles de l'aluminium est injecté sous pression.

La demande US 2015/288265 divulgue un rotor comportant un paquet de tôles et une structure moulée. Cette dernière comporte deux anneaux d'extrémité et une pluralité de rainures autour du paquet de tôles s'étendant entre ces anneaux d'extrémité.

La demande DE 102010041796 divulgue un rotor comportant un fil enroulé autour des barres de cuivre afin d'éviter l'oscillation ces dernières lors du moulage de l'aluminium.

La demande JPS56103953 divulgue un rotor comportant des barres de cuivre insérées dans des encoches d'un paquet de tôles et des anneaux de court-circuit en aluminium moulés sur les extrémités des barres, et dans lequel les tôles sont décalées angulairement autour de l'axe de rotation du rotor.

### Résumé

Un problème qui se pose lors de l'injection de l'aluminium est le maintien des barres dans les encoches correspondantes. Ce maintien ne doit pas gêner la réalisation de l'anneau de court-circuit arrière.

L'invention vise à résoudre ce problème, et elle y parvient grâce à un procédé de fabrication d'un rotor de machine tournante électrique, comportant un paquet de tôles magnétiques définissant des encoches dans lesquelles sont reçues des barres d'un premier matériau conducteur électrique, procédé dans lequel un deuxième matériau électriquement conducteur différent du premier est injecté au moyen d'une presse à injection par l'avant du paquet de tôles, les barres étant maintenues à leur extrémité arrière contre la pression liée à l'injection par un outil de positionnement pour maintenir axialement les barres durant l'injection, l' outil de positionnement traversant une cavité de formation d'un anneau de court-circuit à l'arrière du paquet de tôles.

Grâce à l'invention, les barres sont maintenues axialement dans les encoches lors de l'injection, sans qu'il soit nécessaire de prévoir des dispositions particulières au niveau des encoches. La fabrication du rotor peut donc rester simple. Par exemple, grâce au maintien axial des barres par l'outil de positionnement durant l'injection, il n'est pas nécessaire de prévoir un serrage fort des barres dans le paquet de tôles pour les immobiliser axialement relativement à celui-ci. Il est possible d'introduire les barres avec un jeu relativement important dans les encoches. Ainsi, il n'est pas nécessaire d'utiliser des barres de cuivre usinées avec précision et l'on peut utiliser des barres brutes d'extrusion. Cela évite des opérations d'usinage coûteuses. Il n'est pas non plus nécessaire de prévoir des éléments rapportés sur les barres pour les immobiliser relativement au paquet de tôles, tels que des fils enroulés autour des barres, qui complexifient la réalisation du rotor. De plus, l'insertion des barres dans les encoches est facilitée, du fait qu'un fort serrage n'est pas nécessaire, et l'on évite l'utilisation d'une presse puissante pour pousser les barres à l'intérieur des encoches, qui serait autrement indispensable. Comme les barres n'ont pas à être fortement serrées dans les encoches, cela offre également une plus grande liberté de conception dans le choix de la forme des encoches et de la section des barres, et l'on peut plus aisément choisir des formes optimisant certaines propriétés, telles que par exemple les performances électriques et/ou le remplissage des encoches.

De préférence, les barres dépassent du paquet de tôles pour venir au contact de l'outil de positionnement.

De préférence, les barres sont brutes d'extrusion, et ne sont pas usinées sur leur longueur.

De préférence, les barres sont reçues dans les encoches avec présence d'un jeu entre les barres et les encoches. En particulier, ce jeu peut être tel qu'en l'absence de l'outil de positionnement, la pression d'injection entraînerait un déplacement axial des barres au sein du paquet. Autrement dit, le serrage des barres au sein du paquet avant l'étape d'injection est insuffisant pour que les barres puissent résister à la pression de l'injection sans se déplacer relativement au paquet, en l'absence de l'outil de positionnement.

L'outil de positionnement peut être retiré au démoulage du rotor.

L'outil de positionnement peut comporter des doigts présentant chacun une forme légèrement conique convergeant vers le paquet de tôles.

De préférence, le premier matériau est du cuivre et le deuxième matériau de l'aluminium.

Le rotor peut comporter un anneau d'un matériau conducteur, de préférence, le premier matériau conducteur, pour venir au contact de l'outil de positionnement. Dans ce cas, le nombre de doigts est par exemple inférieur au nombre de barres.

De préférence, les tôles magnétiques comportent un acier magnétique, par exemple fer/silicium, avec ses différentes nuances. L'épaisseur de chaque tôle est par exemple comprise entre 0,35mm et 0,65mm.

L'invention a encore pour objet un rotor de machine électrique tournante, notamment obtenu par la mise en œuvre du procédé tel que défini ci-dessus, comportant :
- un paquet de tôles magnétiques présentant des encoches,
- des barres d'un premier matériau conducteur reçues dans les encoches,
- un deuxième matériau injecté dans les encoches,
- des anneaux de court-circuit moulés avec le deuxième matériau injecté dans les encoches, l'un de ces anneaux présentant des évidements débouchant à l'extérieur et s'étendant jusqu'aux barres ou jusqu'à un insert de forme annulaire reposant sur les barres.

### Description des figures

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente en coupe axiale, schématique et partielle, un exemple de rotor selon l'invention,
- la figure 2 représente un détail de réalisation de l'outil d'injection,
- les figures 3A à 3D représentent des variantes de réalisation des encoches,
- les figures 4 à 6 illustrent de façon schématique et partielle, en section transversale, une cage de rotor selon l'invention, et
- la figure 7 représente de façon schématique, en section axiale, une variante de réalisation de rotor selon l'invention, et
- la figure 8 représente un détail de réalisation d'une variante d'un rotor.

### Rotor

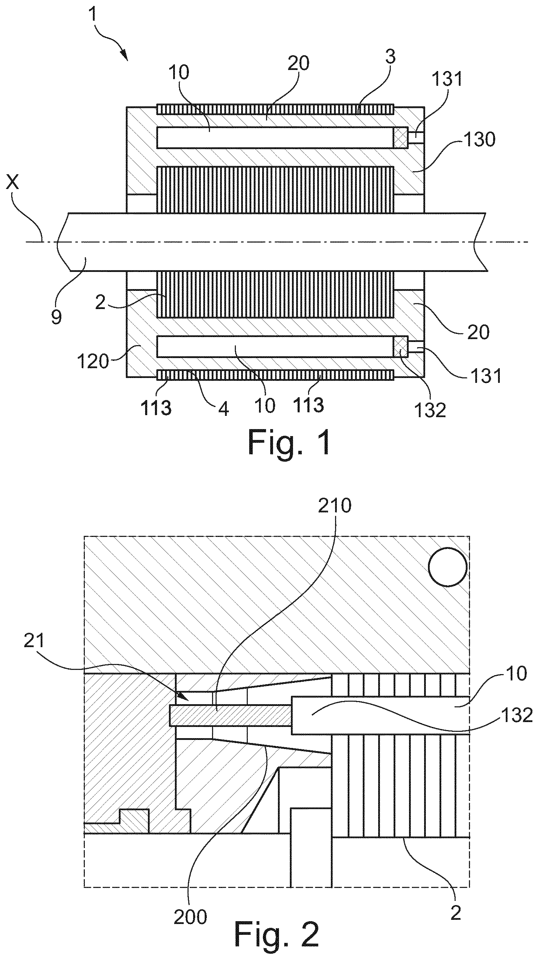

On a représenté à la figure 1 un rotor 1 selon l'invention. Ce rotor 1 comporte un paquet de tôles magnétiques 2, montées sur un arbre 9, par exemple en acier, d'axe X.

Le paquet 2 est formé par la superposition de tôles magnétiques 113 dans lesquelles sont découpés des ajours 3.

La superposition des ajours 3 des tôles 113 forme, au sein du paquet 2, des encoches 4 qui s'étendent longitudinalement d'une extrémité axiale du paquet 2 à l'autre. Les encoches 4 peuvent être droites, c'est-à-dire que toutes les tôles 113 sont exactement superposées sans décalage angulaire d'une tôle 113 à la suivante. Toutefois, de préférence, les tôles 113 sont superposées en étant décalées angulairement légèrement d'une tôle à la suivante de telle sorte que les axes longitudinaux des encoches 4 suivent un trajet hélicoïdal autour de l'axe de rotation du rotor, de façon connue en soi.

Dans l'exemple illustré, toutes les tôles 113 sont identiques et les ajours 3 le sont également, de sorte que le paquet 2 comporte des encoches 4 identiques. Dans des variantes, le paquet 2 est formé par assemblage de tôles 113 qui ne sont pas rigoureusement toutes identiques en vue de face, de l'avant du paquet 2, de sorte que la section d'une encoche 4 peut présenter une forme qui varie lorsque l'on se déplace de l'extrémité avant de l'encoche 4 à l'extrémité arrière. En particulier, les tôles 113 peuvent être identiques lorsqu'elles sont découpées, mais être assemblées en retournant certaines tôles par rapport à d'autres, de telle sorte qu'elles génèrent une évolution de la section de l'encoche 4 lorsque l'on se déplace le long de l'axe de rotation.

Le rotor 1 comporte des barres 10 en cuivre, introduites dans les encoches 4, et un matériau 20, tel que de l'aluminium, injecté dans les encoches 4 dans l'espace laissé libre par les barres 10.

Des anneaux de court-circuit 120 et 130 sont moulés en aluminium aux extrémités du paquet de tôles 2. Ces anneaux 120 et 130 sont d'une seule pièce avec l'aluminium coulé dans les encoches 4.

Comme illustré à la figure 1, le rotor 1 comporte au niveau de l'anneau de court-circuit arrière 130 des évidements 131 qui correspondent à la trace de l'outil utilisé lors de l'injection de l'aluminium, comme cela sera décrit plus loin.

Les barres 10 comportent des portions 132 qui dépassent au sein de l'anneau de court-circuit arrière 130, et qui définissent le fond des évidements 131.

### Encoches avec reliefs de friction

Certaines encoches peuvent présenter des reliefs de friction 5 agencés pour retenir par friction les barres 10 et des reliefs de blocage 30.

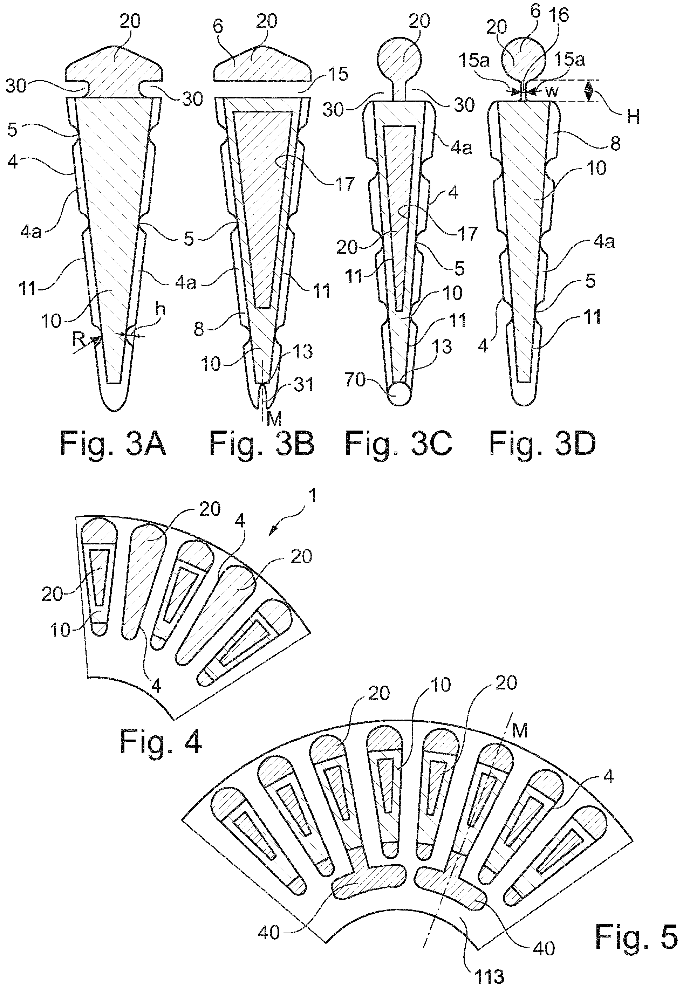

Ces reliefs de friction 5 sont par exemple visibles dans les variantes de réalisation des encoches des figures 3A à 3D.

Comme illustré, au moins une partie des ajours peut présenter sur au moins une partie de leur pourtour des reliefs 5, les barres 10 électriquement conductrices reçues dans les encoches 4 venant en appui par au moins une face principale 11 contre lesdits reliefs 5.

Ces reliefs 5 peuvent permettre de maintenir efficacement les barres à l'intérieur du paquet de tôles. Les reliefs 5 peuvent être réalisés très précisément lors du découpage des tôles, et permettent une plus grande tolérance de section des barres.

En particulier, lorsqu'un matériau 20 est injecté dans les encoches 4 autour des barres 10, ces dernières peuvent demeurer immobiles au sein du paquet. Les reliefs 5 peuvent également réduire la force à exercer sur les barres 10 pour les insérer dans le paquet de tôles, en réduisant la surface de contact entre les barres 10 et les tôles.

Les reliefs 5 peuvent encore, en diminuant la surface de contact entre les barres 10 et les tôles, réduire les courants inter-barres circulant dans les tôles et la perte d'énergie correspondante par effet Joule.

Les reliefs 5 sont de préférence présents sur des grands côtés opposés 4a des encoches, ces grands côtés 4a s'étendant sensiblement radialement, et les barres conductrices 10 viennent en appui contre ces reliefs 5 par deux faces principales opposées 11.

Les reliefs 5 peuvent se présenter sous la forme de bossages, s'étendant de préférence sur sensiblement toute la dimension radiale d'une barre 10.

Les bossages 5 peuvent présenter une amplitude h comprise entre 0,2 et 0,4 mm, par exemple de 0,3mm comme illustré à la figure 3A. Les bossages 5 peuvent être de forme arrondie et présentent par exemple un rayon de courbure R à leur sommet compris entre 0,4 et 0,6mm, par exemple de 0,5mm.

Toutes les tôles du paquet peuvent être identiques.

### Encoches avec reliefs de blocage

Au moins une tôle du paquet peut présenter au moins un relief de blocage 30 venant en appui contre une face d'extrémité radialement extérieure d'une barre correspondante 10, mieux deux tels reliefs 30 opposés venant chacun en appui contre la même face d'extrémité, comme représenté aux figures 3A et 3C.

Au moins une tôle du paquet peut présenter également au moins un relief de blocage 31 venant en appui contre une face d'extrémité 13 radialement intérieure d'une barre correspondante, comme illustré à la figure 3B. Ce relief de blocage 31 est de préférence centré sur le plan médian M de symétrie de l'ajour correspondant.

### Encoches avec reliefs de séparation

Comme illustré aux figures 3B et 3D, des reliefs de séparation 15 ou 15a peuvent s'étendre au sein des ajours et séparer les encoches 4 en des premiers 6 et deuxièmes 8 compartiments distincts, les premiers compartiments 6 étant radialement intérieurs par rapport aux seconds compartiments 8.

Les barres conductrices 10 du premier matériau peuvent être disposées dans les premiers ou les deuxièmes compartiments d'une partie au moins des encoches 4. Le deuxième matériau électriquement conducteur 20 peut alors être disposé dans les autres compartiments de ces encoches 4. Les reliefs de séparation 15 ou 15a qui s'étendent au sein des ajours empêchent les premier et deuxième matériaux de venir en contact. Ainsi, les phénomènes potentiels de corrosion sont éliminés.

Les reliefs de séparation 15 ou 15a peuvent être de différentes formes, étant réalisés par découpe avec la matière des tôles magnétiques.

Dans l'exemple de la figure 3B, les reliefs de séparation sont des ponts de matière 15 qui séparent chaque encoche 4 en des premier et deuxième compartiments 6 et 8 non communicants.

Dans la variante de la figure 3D, les reliefs de séparation sont constitués par des avancées 15a disposées en regard l'une de l'autre et qui ménagent entre elles un canal 16 suffisamment étroit pour empêcher un contact entre les premier et deuxième matériaux. Par exemple, lorsque les premiers compartiments 6 sont remplis par injection d'aluminium 20 en fusion, des canaux 16 ayant une largeur w inférieure à 0,6 mm et une hauteur H inférieure à 2 mm peuvent suffire pour empêcher l'aluminium 20 d'entrer dans les deuxièmes compartiments 8 à travers les canaux 16.

Les barres conductrices 10 du premier matériau peuvent être insérées dans les premiers compartiments 6, le premier matériau étant de préférence du cuivre, le deuxième matériau 20 étant injecté dans les deuxièmes compartiments 8, ce deuxième matériau étant de préférence de l'aluminium. Une telle réalisation convient tout particulièrement à une machine destinée à être entraînée avec un courant de fréquence fixe. En effet, lorsque le moteur est connecté au réseau, le démarrage du moteur demande un courant élevé par rapport au point nominal. Le rapport entre le courant de démarrage et le courant nominal étant limité par les normes en vigueur, le but est de le réduire. Au démarrage, la partie de l'encoche qui génère la résistance électrique est surtout le haut de l'encoche, près de l'entrefer, en raison de l'effet de peau. Afin de limiter ce courant de démarrage, la résistance de la cage doit augmenter. Ainsi, le fait d'avoir le matériau de plus forte résistivité électrique plus près de l'entrefer permet de réduire le courant de démarrage.

Dans une variante de réalisation, les barres conductrices 10 du premier matériau sont insérées dans les deuxièmes compartiments 8, ce premier matériau étant de préférence du cuivre, le deuxième matériau 20 étant injecté dans les premiers compartiments 6, ce deuxième matériau 20 étant de préférence de l'aluminium. Une telle réalisation convient plus particulièrement à un moteur connecté à un variateur, pour un entraînement à vitesse variable. Dans ce cas, le courant de démarrage n'est pas une contrainte. Le fait de positionner le matériau de moindre résistivité électrique dans le compartiment plus près de l'entrefer et le cas échéant d'introduire une ouverture, notamment sous forme de fente, du côté de l'entrefer qui est dépourvu de matériau conducteur électrique, permet de réduire les pertes électriques. De plus, la présence d'une barre dans la partie supérieure de l'encoche empêche le deuxième matériau de s'écouler par l'ouverture éventuelle de l'encoche du côté de l'entrefer lors de l'injection.

### Barres creuses

Une ou plusieurs des barres peuvent être creuses.

Dans les variantes des figures 3B et 3C, les barres 10 sont creuses et présentent une cavité intérieure longitudinale 17 qui est remplie par le deuxième matériau 20 injecté.

Le fait que les barres 10 soient creuses facilite le remplissage de la cavité servant à mouler l'anneau de court-circuit arrière, lorsque l'injection a lieu par l'avant.

De plus, la quantité totale de cuivre utilisée peut être moindre, ce qui permet de réduire le coût de la machine.

Le deuxième matériau 20 qui est injecté au sein des barres 10 se trouve protégé du contact avec l'oxygène de l'air par le matériau des barres 10, sauf aux extrémités axiales de celles-ci. On limite de cette façon les phénomènes de corrosion à l'interface entre les premier et deuxième matériaux.

Les barres 10 présentent de préférence, en section transversale, un contour fermé, qui peut être non circulaire.

De préférence, le deuxième matériau 20 remplit les encoches également à l'extérieur des barres 10, notamment lorsque les barres 10 n'occupent pas toute la section des encoches 4.

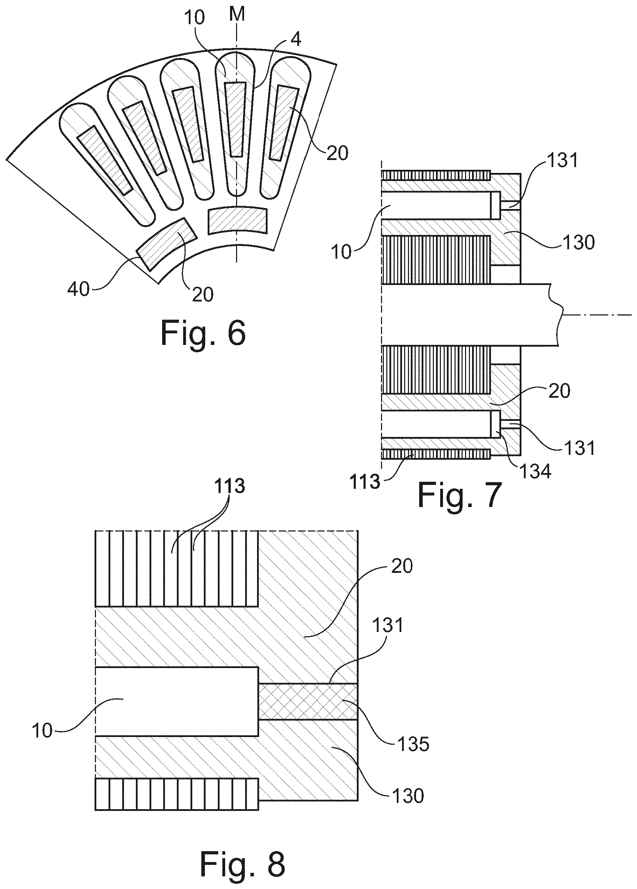

Les barres 10, creuses ou non, peuvent s'étendre sur toute la dimension radiale des encoches, comme dans la figure 6. En particulier, les barres 10 peuvent avoir une section transversale qui est sensiblement de même forme que les encoches 4.

En variante, les barres, creuses ou non, ont une dimension radiale qui est moindre que celle des encoches, comme dans la figure 4.

Les barres 10, creuses ou non, peuvent s'étendre sur au moins la longueur du paquet de tôles.

Toutes les encoches 4 du rotor peuvent comporter des barres creuses 10 avec le deuxième matériau 20 injecté à l'intérieur. En variante, certaines encoches peuvent ne pas comporter de barre, étant dans ce cas entièrement remplies par le deuxième matériau 20. Le rotor comporte par exemple plus d'encoches avec des barres que d'encoches sans barre, ou inversement.

### Nombre de barres inférieur au nombre d'encoches

Dans la variante illustrée à la figure 4, les barres 10 sont présentes dans une partie seulement des encoches 4.

L'absence de barres 10 dans certaines encoches 4 permet de conserver une section totale plus importante pour le passage de l'aluminium injecté, et ainsi de faciliter le remplissage de la bague arrière lorsque l'injection se fait par l'avant.

La présence de barres 10 en un matériau de moindre résistance électrique tel que du cuivre dans certaines encoches améliore les performances électriques. Il est possible, en choisissant le nombre de barres rajoutées, d'optimiser l'accroissement des performances au regard du coût de la machine, le cuivre étant plus coûteux que l'aluminium.

Le rotor peut comporter plus d'encoches 4 avec des barres 10 que d'encoches 4 sans barre 10. Dans d'autres variantes, c'est le contraire et le rotor comporte plus d'encoches 4 sans barre 10 qu'avec barre 10.

De multiples dispositions des barres au sein des encoches 4 sont possibles. Par exemple, on peut faire alterner dans le sens circonférentiel une encoche sans barre et une encoche avec barre. On peut également faire alterner de façon plus générale n1 encoches sans barre avec n2 encoches avec barre, n1 et n2 étant des entiers strictement supérieurs à 1.

### Encoches secondaires

Comme illustré aux figures 4 et 5, les ajours peuvent former au sein du paquet n encoches principales 4 telles que définies ci-dessus et m encoches secondaires 40, radialement intérieures par rapport aux encoches principales, avec n et m entiers non nuls et n>m.

On bénéficie grâce aux encoches secondaires 40 d'une plus grande section de passage pour le deuxième matériau conducteur, lors de l'injection. Ce dernier étant injecté depuis l'avant, le fait d'avoir une section de passage plus grande assure la réalisation sans défaut de l'anneau de court-circuit arrière.

Les encoches secondaires 40 sont disjointes des encoches principales 4 dans l'exemple de la figure 6.

Dans la variante illustrée à la figure 5, chaque encoche secondaire 40 communique avec une encoche principale 4.

Chaque encoche secondaire 40 peut être centrée sur un plan médian M d'une encoche principale 4.

Le rapport n/m entre le nombre d'encoches principales 4 et le nombre d'encoches secondaires 40 est par exemple égal à 2 ou 3.

Les encoches secondaires 40 ont de préférence une étendue angulaire, mesurée autour du centre du paquet de tôles, supérieure à celle d'une encoche principale 4.

### Eléments de blocage

La machine peut comporter des goupilles ou rivets 70 insérés dans les encoches au contact des barres.

Comme illustré à la figure 3C, ces goupilles ou rivets 70 sont disposés dans le fond des encoches 4, pour venir en appui contre la face d'extrémité radialement intérieure 13 des barres 10.

Les goupilles ou rivets 70 peuvent être de forme conique.

Les goupilles ou rivets 70 peuvent aider au maintien des tôles avant la mise en place du paquet de tôles dans la presse à injecter.

En particulier, les barres peuvent être relativement libres dans les encoches en l'absence des goupilles ou rivets, ce qui peut faciliter leur mise en place et autoriser des tolérances dimensionnelles plus grandes dans la fabrication des barres, lesquelles peuvent ainsi ne pas avoir été usinées, et rester brutes d'extrusion.

### Fabrication du rotor

Pour fabriquer le rotor, on peut découper les tôles 113 avec une presse équipée d'un poinçon ou au laser et former, lors du découpage, des ajours 3 correspondant aux encoches 4 et, le cas échéant, aux encoches secondaires 40, et les bossages 5.

Ensuite, les tôles 113 sont superposées pour former le paquet 2, puis les barres 10 sont insérées dans les encoches 4 à force. Lors de l'insertion, la présence des bossages 5 facilite l'avancement des barres 10 au sein du paquet 2 de tôles 13.

La presse comporte, comme illustré à la figure 2, une cavité arrière 200 qui sert à mouler l'anneau de court-circuit arrière 130.

Les barres 10 dépassent du paquet de tôles 2 et font saillie dans cette cavité arrière 200.

Un outil de positionnement 21 comportent des doigts de positionnement 210. Les doigts de positionnement 210 s'étendent au sein de la cavité 200 et viennent en appui à leur extrémité axiale contre les faces d'extrémité des barres 10 respectives.

Dans une variante, le nombre de doigts 210 est réduit et la portion 132 des barres qui dépasse du paquet de tôles est remplacée par un anneau d'un matériau conducteur 134, par exemple en cuivre, comme illustré à la figure 7. Le nombre de doigts 210 peut être inférieur au nombre de barres.

Dans une autre variante, les doigts 210 viennent en appui directement sur les barres 10 à leur extrémité, et celles-ci affleurent à la surface du paquet 2.

On procède à l'injection par l'avant.

Lors de l'injection, l'aluminium circule dans les encoches et remplit les cavités destinées à la formation des bagues avant et arrière 120, 130.

Lors du démoulage, les doigts de positionnement 210 forment les évidements 131 sur la bague arrière 130. Ces évidements 131 peuvent être bouchés par une résine 135, par exemple, comme illustré à la figure 8.

Bien entendu, l'invention n'est pas limitée aux exemples qui viennent d'être décrits.

Par exemple, les encoches peuvent avoir d'autres formes, de même que les barres.

D'autres matériaux que le cuivre et l'aluminium peuvent être utilisés.

## Revendications

1. Procédé de fabrication d'un rotor de machine tournante électrique, comportant un paquet (2) de tôles magnétiques (113) définissant des encoches (4) dans lesquelles sont reçues des barres (10) d'un premier matériau conducteur électrique, procédé dans lequel un deuxième matériau électriquement conducteur (20) différent du premier est injecté au moyen d'une presse à injection par l'avant du paquet de tôles, la presse comportant une cavité (200) de formation d'un anneau de court-circuit (130) à l'arrière du paquet de tôles, les barres étant maintenues à leur extrémité arrière contre la pression liée à l'injection par un outil de positionnement (21) pour maintenir axialement les barres durant l'injection, l' outil de positionnement (21) comportant des doigts de positionnement (210) s'étendant au sein de la cavité (200), les barres (10) étant maintenues dans leur position axiale pendant l'injection du deuxième matériau par les doigts de positionnement (210).

2. Procédé selon la revendication 1, les barres (10) dépassant du paquet (2) de tôles pour venir au contact de l'outil de positionnement (21).

3. Procédé selon la revendication 1, les barres (10) affleurant à la surface du paquet (2).

4. Procédé selon l'une des revendications précédentes, l'outil de positionnement (21) étant retiré au démoulage du rotor.

5. Procédé selon l'une quelconque des revendications précédentes, les doigts (210) présentant chacun une forme légèrement conique convergeant vers le paquet (2) de tôles.

6. Procédé selon l'une quelconque des revendications précédentes, le premier matériau étant du cuivre.

7. Procédé selon l'une quelconque des revendications précédentes, le deuxième matériau étant de l'aluminium.

8. Procédé selon l'une quelconque des revendications précédentes, les barres étant brutes d'extrusion.

9. Procédé selon l'une quelconque des revendications précédentes, les barres étant montées avec jeu dans les encoches, tel qu'en l'absence de l'outil de positionnement, la pression d'injection entraînerait un déplacement axial des barres au sein du paquet.

10. Procédé selon l'une quelconque des revendications précédentes, la presse comportant la cavité arrière (200) de formation d'un anneau de court-circuit (130) à l'arrière du paquet de tôles.

11. Rotor de machine électrique tournante obtenu par la mise en œuvre du procédé tel que défini dans l'une quelconque des revendications précédentes, comportant :
- un paquet (2) de tôles magnétiques présentant des encoches,
- des barres (10) d'un premier matériau conducteur reçues dans les encoches,
- un deuxième matériau (20) injecté dans les encoches (4),
- des anneaux de court-circuit (120,130) moulés avec le deuxième matériau injecté dans les encoches, l'un de ces anneaux présentant des évidements (131) débouchant à l'extérieur et s'étendant jusqu'aux barres (10) ou jusqu'à un insert (134) de forme annulaire reposant sur les barres (10).

## Patentansprüche

1. Verfahren zur Herstellung eines Rotors einer rotierenden elektrischen Maschine, welche ein Paket (2) aus Magnetblechen (113) umfasst, die Nuten (4) definieren, in denen Stäbe (10) aus einem ersten elektrisch leitfähigen Material aufgenommen werden, wobei bei dem Verfahren ein zweites elektrisch leitfähiges Material (20), das vom ersten verschieden ist, mittels einer Spritzpresse von der Vorderseite des Blechpakets aus eingespritzt wird, wobei die Presse einen Hohlraum (200) zur Bildung eines Kurzschlussringes (130) an der Rückseite des Blechpakets aufweist, wobei die Stäbe an ihrem hinteren Ende gegen den mit der Einspritzung zusammenhängenden Druck durch ein Positionierwerkzeug (21) gehalten werden, um die Stäbe während der Einspritzung axial zu halten, wobei das Positionierwerkzeug (21) Positionierfinger (210) umfasst, die sich innerhalb des Hohlraums (200) erstrecken, wobei die Stäbe (10) während der Einspritzung des zweiten Materials durch die Positionierfinger (210) in ihrer axialen Position gehalten werden.

2. Verfahren nach Anspruch 1, wobei die Stäbe (10) über das Blechpaket (2) hinausragen, um mit dem Positionierwerkzeug (21) in Kontakt zu kommen.

3. Verfahren nach Anspruch 1, wobei die Stäbe (10) bündig mit der Oberfläche des Pakets (2) sind.

4. Verfahren nach einem der vorangehenden Ansprüche, wobei das Positionierwerkzeug (21) beim Entformen des Rotors herausgezogen wird.

5. Verfahren nach einem der vorhergehenden Ansprüche, wobei die Finger (210) jeweils eine leicht konische Form aufweisen, die zum Blechpaket (2) hin zuläuft.

6. Verfahren nach einem der vorhergehenden Ansprüche, wobei das erste Material Kupfer ist.

7. Verfahren nach einem der vorhergehenden Ansprüche, wobei das zweite Material Aluminium ist.

8. Verfahren nach einem der vorhergehenden Ansprüche, wobei die Stäbe Extrusionsrohlinge sind.

9. Verfahren nach einem der vorhergehenden Ansprüche, wobei die Stäbe mit Spiel in den Nuten angebracht werden, so dass ohne das Positionierwerkzeug der Einspritzdruck eine axiale Bewegung der Stäbe innerhalb des Pakets zur Folge hätte.

10. Verfahren nach einem der vorhergehenden Ansprüche, wobei die Presse den hinteren Hohlraum (200) zur Bildung eines Kurzschlussringes (130) an der Rückseite des Blechpakets aufweist.

11. Rotor einer rotierenden elektrischen Maschine, welcher durch Anwendung des Verfahrens nach einem der vorhergehenden Ansprüche erhalten wird, umfassend:
- ein Paket (2) aus Magnetblechen, das Nuten aufweist,
- Stäbe (10) aus einem ersten leitfähigen Material, die in den Nuten aufgenommen sind,
- ein zweites Material (20), das in die Nuten (4) eingespritzt ist,
- Kurzschlussringe (120, 130), die mit dem in die Nuten eingespritzten zweiten Material geformt sind, wobei einer dieser Ringe Aussparungen (131) aufweist, die sich nach außen öffnen und sich bis zu den Stäben (10) oder bis zu einem ringförmigen Einsatz (134), der auf den Stäben (10) aufliegt, erstrecken.

## Claims

1. Method for manufacturing a rotor of a rotary electric machine, having a stack (2) of magnetic laminations (113) defining slots (4) in which bars (10) made from a first electrically conductive material are received, in which method a second electrically conductive material (20), different from the first, is injected by means of an injection press via the front of the stack of laminations, the press having a cavity (200) for formation of a short-circuiting ring (130) at the rear of the stack of laminations, the bars being held at their rear end against the pressure associated with the injection by a positioning tool (21) for holding the bars axially during the injection, the positioning tool (21) having positioning fingers (210) extending within the cavity (200), the bars (10) being held in their axial position during the injection of the second material by the positioning fingers (210).

2. Method according to Claim 1, the bars (10) protruding beyond the stack (2) of laminations to come into contact with the positioning tool (21).

3. Method according to Claim 1, the bars (10) lying flush with the surface of the stack (2).

4. Method according to one of the preceding claims, the positioning tool (21) being withdrawn on the demoulding of the rotor.

5. Method according to any one of the preceding claims, the fingers (210) each having a slightly conical shape converging towards the stack (2) of laminations.

6. Method according to any one of the preceding claims, the first material being copper.

7. Method according to any one of the preceding claims, the second material being aluminium.

8. Method according to any one of the preceding claims, the bars being in the as-extruded state.

9. Method according to any one of the preceding claims, the bars being mounted with clearance in the slots such that, in the absence of the positioning tool, the injection pressure would cause axial movement of the bars within the stack.

10. Method according to any one of the preceding claims, the press having the rear cavity (200) for formation of a short-circuiting ring (130) at the rear of the stack of laminations.

11. Rotor of a rotary electric machine, obtained by implementing the method as defined in any one of the preceding claims, having:
- a stack (2) of magnetic laminations exhibiting slots,
- bars (10) made from a first conductive material received in the slots,
- a second material (20) injected into the slots (4),
- short-circuiting rings (120, 130) cast with the second material injected into the slots, one of these rings having recesses (131) opening to the outside and extending as far as the bars (10) or as far as an insert (134) of annular shape resting on the bars (10).
